(19) Europäisches Patentamt / European Patent Office / Office européen des brevets

(11) **EP 3 774 277 B1**

(12) **FASCICULE DE BREVET EUROPEEN**

(45) Date de publication et mention de la délivrance du brevet:
**12.01.2022 Bulletin 2022/02**

(21) Numéro de dépôt: **19713105.5**

(22) Date de dépôt: **06.03.2019**

(51) Int Cl.:
**B29C 49/78** (2006.01)    **B29C 49/06** (2006.01)
**B29C 49/48** (2006.01)    **B29K 67/00** (2006.01)
**B29L 31/00** (2006.01)

(86) Numéro de dépôt international:
**PCT/FR2019/050495**

(87) Numéro de publication internationale:
**WO 2019/186007 (03.10.2019 Gazette 2019/40)**

(54) **PROCÉDÉ DE FABRICATION DE RÉCIPIENTS, PAR BOXAGE AJUSTABLE EN FONCTION DE LA COURBE DE SOUFFLAGE**

VERFAHREN ZUR HERSTELLUNG VON BEHÄLTERN DURCH JE NACH BLASKURVE EINSTELLBAREM EINPACKEN

METHOD FOR PRODUCING CONTAINERS, BY BOXING THAT CAN BE ADJUSTED DEPENDING ON THE BLOWING CURVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2018 FR 1852668**

(43) Date de publication de la demande:
**17.02.2021 Bulletin 2021/07**

(73) Titulaire: **Sidel Participations**
**76930 Octeville-sur-Mer (FR)**

(72) Inventeur: **PROTAIS, Pierrick**
**76930 Octeville-sur-Mer (FR)**

(74) Mandataire: **Sidel Group**
**c/o Sidel Participations**
**Avenue de la Patrouille de France**
**76930 Octeville-sur-mer (FR)**

(56) Documents cités:
**US-A- 5 122 327**    **US-A1- 2009 139 996**
**US-A1- 2010 204 819**    **US-A1- 2011 298 162**
**US-A1- 2014 145 378**    **US-A1- 2014 203 481**

EP 3 774 277 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne la fabrication des récipients par formage à partir d'ébauches en matière thermoplastique (par ex. en PET).

Le formage d'un récipient comprend l'introduction de l'ébauche (il peut s'agir d'une préforme ou d'un récipient intermédiaire ayant subi une opération de préformage), préalablement chauffée à une température supérieure à la température de transition vitreuse de la matière (cette température est d'environ 80°C dans le cas du PET),dans un moule muni d'une paroi définissant une cavité à l'empreinte du récipient, et l'injection dans l'ébauche, par une ouverture dont elle est pourvue au niveau de son col, d'un fluide sous pression tel qu'un gaz (généralement de l'air) pour plaquer la matière contre la paroi du moule.

En pratique, le formage comprend généralement deux phases consécutives : une phase de présoufflage lors de laquelle on injecte dans l'ébauche un fluide à une pression de présoufflage, et une phase de soufflage lors de laquelle on injecte dans l'ébauche un fluide à une pression de soufflage supérieure à la pression de présoufflage. Dans les procédés classiques, où de l'air est employé pour réaliser le formage, la pression de présoufflage est comprise entre 5 et 16 bars, et la pression de soufflage entre 20 et 40 bars.

Le formage peut inclure une phase d'étirage, qui consiste à guider axialement la préforme pendant la phase de présoufflage au moyen d'une tige mobile en translation.

Pour certaines applications, il est nécessaire de former sur le récipient des réserves en creux, notamment dans un but esthétique (par ex. création de galbes), fonctionnel (réalisation d'une poignée de préhension du récipient) ou structurel (par ex. réalisation de panneaux latéraux ou d'un fond ayant subi un étirage supplémentaire, destinés à absorber la déformation du récipient lors d'un remplissage à chaud).

Lorsqu'une telle réserve atteint une certaine profondeur, le récipient ne peut être formé dans un moule ordinaire car, malgré la pression de soufflage élevée, celle-ci est insuffisante pour parfaitement appliquer la matière contre le relief du moule destiné à former la réserve, surtout dans les zones tournées à l'opposé du col du récipient à partir duquel se développe la bulle de soufflage.

Aussi, on a habituellement recours à des moules munis d'inserts mobiles initialement escamotés dans la paroi du moule et déployés en cours de formage pour venir repousser la paroi du récipient, comme cela est illustré dans la demande de brevet européen EP 1 922 256 ou la demande de brevet américain correspondante US 2009/139996 (Sidel).

Cette technique, couramment appelée « boxage », est notamment utilisée pour le formage de récipients munis d'une poignée intégrée, ou d'un fond ayant subi un étirage supplémentaire et destiné à absorber la déformation du récipient lors d'un remplissage à chaud, cf. la demande de brevet européen EP 2 173 637 (Sidel).

La technique du boxage est complexe car, suivant la forme et la profondeur des réserves à réaliser, le repoussage opéré par l'insert peut conduire à un amincissement de la matière, voire à une rupture locale de la paroi du récipient qui rend celui-ci inexploitable.

C'est pourquoi le réglage des machines dédiées au boxage est délicat ; on peut le confier à des opérateurs expérimentés dont le tour de main permet de réaliser au jugé des récipients conformes.

Mais il est usuel que les paramètres de réglage (notamment la pression, le débit de soufflage et la vitesse de déplacement de l'insert), initialement corrects, subissent au cours de la fabrication des dérives incontrôlées qui affectent la qualité des récipients.

La perception et la réactivité humaines ne sont ni suffisantes pour garantir la détection des dérives, ni assez fines et rapides pour procéder aux ajustements nécessaires.

C'est pourquoi des processus d'automatisation ont été mis en œuvre. Ainsi, le brevet français FR3029133 (Sidel) propose une solution pour lier le boxage au soufflage, notamment en décalant l'initiation de la phase de boxage lorsqu'un intervalle de temps séparant un instant marquant le début réel de déplacement de l'insert et l'instant marquant le début réel de la phase de soufflage est décrété significativement différent d'une valeur de référence.

Cette solution donne partiellement satisfaction ; des tests montrent en effet que la précision du réglage pourrait encore être accrue : tel est un objectif de l'invention, le but final étant d'améliorer la qualité des récipients produits.

A cet effet, il est proposé un procédé de fabrication d'un récipient à partir d'une ébauche en matière plastique, au sein d'une unité de formage comprenant :

- Un moule muni d'une paroi définissant une cavité à l'empreinte du récipient et d'un insert mobile, par rapport à la paroi, entre une position rétractée, dans laquelle l'insert est en retrait par rapport à la cavité, et une position déployée, dans laquelle l'insert fait au moins en partie saillie dans la cavité,
- Un système de boxage comprenant un vérin, sur lequel est monté l'insert, un circuit fluidique reliant le vérin à une source de fluide sous pression, et une électrovanne interposée sur le circuit fluidique entre le vérin et la source de fluide sous pression ;
- Une unité de contrôle reliée à l'électrovanne et programmée pour en faire varier des consignes de débit afin de piloter le déplacement de l'insert ;

ce procédé comprenant :

- Une phase de présoufflage, qui comprend l'injection, dans l'ébauche préalablement introduite dans le moule, d'un fluide à une pression de présoufflage ;

- Une phase de soufflage postérieure à la phase de présoufflage, qui comprend l'injection, dans l'ébauche, d'un fluide à une pression de soufflage supérieure à la pression de présoufflage ;
- Une phase de boxage, qui comprend le déplacement de l'insert de sa position rétractée vers sa position déployée pendant l'une au moins des phases précitées de présoufflage ou de soufflage ;
- Une phase de mesure, en temps réel, de la position de l'insert, les valeurs de la position de l'insert étant mémorisées ;
- Une phase de construction, à partir des valeurs de la position de l'insert ainsi mémorisées, d'une courbe dite de boxage caractérisant les variations de la position de l'insert en fonction du temps ;

ce procédé comprenant en outre les opérations consistant à :

- Prendre en compte, sur une courbe de soufflage de référence caractérisant les variations de la pression régnant dans l'ébauche pendant le présoufflage et le soufflage ;

  • Un premier point d'inflexion à partir duquel, pendant le présoufflage, la pression est strictement croissante ;
  • Un deuxième point d'inflexion postérieur au premier point d'inflexion et à partir duquel la pente de la courbe présente un accroissement ;

- Détecter sur la courbe de boxage :

  • Un instant de début de boxage marquant le début du déplacement de l'insert ;
  • Un instant de fin de boxage marquant l'arrivée de l'insert en fin de course ;

- Mesurer :

  • Une première distance parcourue par l'insert dans un premier intervalle de temps compris entre l'instant de début de boxage et un instant décrété correspondre au premier point d'inflexion de la courbe de soufflage de référence ;
  • Une deuxième distance parcourue par l'insert dans un second intervalle de temps compris entre l'instant décrété correspondre au premier point d'inflexion et un instant décrété correspondre au deuxième point d'inflexion de la courbe de soufflage de référence ;
  • Une troisième distance parcourue par l'insert dans un troisième intervalle de temps compris entre l'instant décrété correspondre au deuxième point d'inflexion de la courbe de soufflage de référence et l'instant de fin de boxage ;

- Comparer les distances mesurées avec des distances nominales respectives prédéterminées ;
- Si l'une au moins des distances mesurées est décrétée différente de la distance nominale correspondante, commander, par l'unité de contrôle, pour le cycle de fabrication suivant dans la dite unité, une modification de la consigne de débit de l'électrovanne dans chaque intervalle de temps où une différence a été relevée.

Ainsi, en modifiant si nécessaire la consigne de l'électrovanne en fonction des mesures, la ou les distances parcourues par l'insert dans les divers intervalles se rapprochent jusqu'à atteindre les distances nominales.

Diverses caractéristiques ou étapes supplémentaires peuvent être prévues, seules ou en combinaison.

- Une distance ($D$) mesurée est décrétée différente de la distance nominale ($Dth$) correspondante dès lors que la distance mesurée est différente de la distance nominale correspondante, soit $D \neq Dth$.
- Selon une caractéristique préférée, une distance ($D$) mesurée est décrétée différente de la distance nominale ($Dth$) correspondante si l'écart entre la distance mesurée et la distance nominale est supérieur ou égal à 5% de la valeur de la distance nominale, soit :

$$|Dth - D| \geq 0,05\ Dth$$

- Pour chaque modèle de récipient destiné à être fabriqué au sein de l'unité de formage, la courbe de soufflage de référence caractérisant les variations de la pression régnant dans l'ébauche en fonction du temps est élaborée lors de la mise au point de l'équipement intégrant cette unité.

Selon un mode de réalisation :

- La première distance est mesurée dans un premier intervalle de temps compris entre l'instant de début de boxage et un instant prédéterminé auquel l'insert est supposé avoir parcouru la première distance ;
- La deuxième distance est mesurée dans un second intervalle de temps compris entre l'instant auquel l'insert est supposé avoir parcouru la première distance et un instant prédéterminé auquel l'insert est supposé avoir parcouru la deuxième distance ;
- La troisième distance est mesurée dans un troisième intervalle de temps compris entre l'instant auquel l'insert est supposé avoir parcouru la deuxième distance et l'instant de fin de boxage.

En variante :

- La phase de mesure comprend la mesure en temps réel de la pression régnant dans l'ébauche pendant les phases de présoufflage et de soufflage ;

- La première distance est mesurée dans un premier intervalle de temps compris entre l'instant de début de boxage et un instant auquel la pression dans l'ébauche atteint une valeur prédéterminée décrétée correspondre au premier point d'inflexion ;

- La deuxième distance est mesurée dans un second intervalle de temps compris entre l'instant auquel l'insert est supposé avoir parcouru la première distance et un instant auquel la pression dans l'ébauche atteint une deuxième valeur prédéterminée décrétée correspondre au deuxième point d'inflexion ;

- La troisième distance est mesurée dans un troisième intervalle de temps compris entre l'instant auquel la pression dans l'ébauche atteint la deuxième valeur prédéterminée, et l'instant de fin de boxage.

Selon un autre mode de réalisation, il est prévu :

- Dans la phase de mesure, la mesure en temps réel de la pression régnant dans l'ébauche pendant les phases de présoufflage et de soufflage, les valeurs de pression étant mémorisées ;

- Dans la phase de construction, la construction d'une courbe dite de soufflage caractérisant les variations de la pression régnant dans l'ébauche en fonction du temps ;

- La détection du premier point d'inflexion et du deuxième point d'inflexion sur la courbe de soufflage de référence.

Lorsqu'une distance mesurée est décrétée inférieure à la distance nominale correspondante, l'unité de contrôle commande, pour le cycle de fabrication suivant dans la dite unité, une augmentation de la consigne de débit de l'électrovanne dans l'intervalle de temps où une différence a été relevée.

Inversement, lorsqu'une distance est décrétée supérieure à la distance nominale correspondante, l'unité de contrôle commande, pour le cycle de fabrication suivant dans la dite unité, une diminution de la consigne de débit de l'électrovanne dans chaque intervalle de temps où une différence a été relevée.

D'autres objets et avantages de l'invention apparaîtront à la lumière de la description d'un mode de réalisation, faite ci-après en référence aux dessins annexés dans lesquels :

- La FIG.1 est une vue en coupe schématique montrant une unité de formage équipée d'un moule, d'un système d'injection et d'un système de boxage, montré au début du formage d'un récipient à partir d'une ébauche ;

- La FIG.2 est une vue similaire à la FIG.1, montrant la fin de la phase de présoufflage ;

- La FIG.3 est une vue similaire aux FIG.1 et FIG.2, montrant la fin de la phase de boxage ;

- La FIG.4 est un diagramme sur lequel sont tracés, l'une au-dessus de l'autre, de manière synchronisée temporellement :

  • En haut, une courbe de soufflage de référence illustrant les variations de la pression mesurée dans l'ébauche au cours du temps ;
  • En bas, une courbe de boxage illustrant les variations de la position mesurée de l'insert au cours du temps lors d'une phase de soufflage.

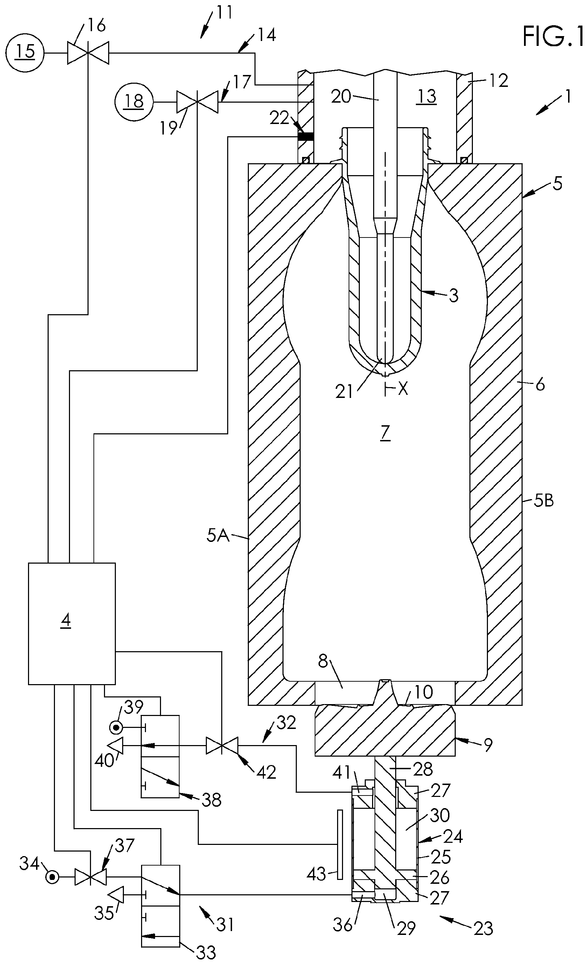

Sur les FIGS.1 à 3 est représentée une unité 1 de formage d'un récipient 2 par étirage soufflage à partir d'une ébauche 3 en matière plastique, notamment en PET (polytéréphtalate d'éthylène). L'ébauche 3 peut être une préforme brute d'injection (comme dans l'exemple illustré) ou un récipient intermédiaire obtenu par une ou plusieurs opérations de formage préalable réalisées sur une préforme brute.

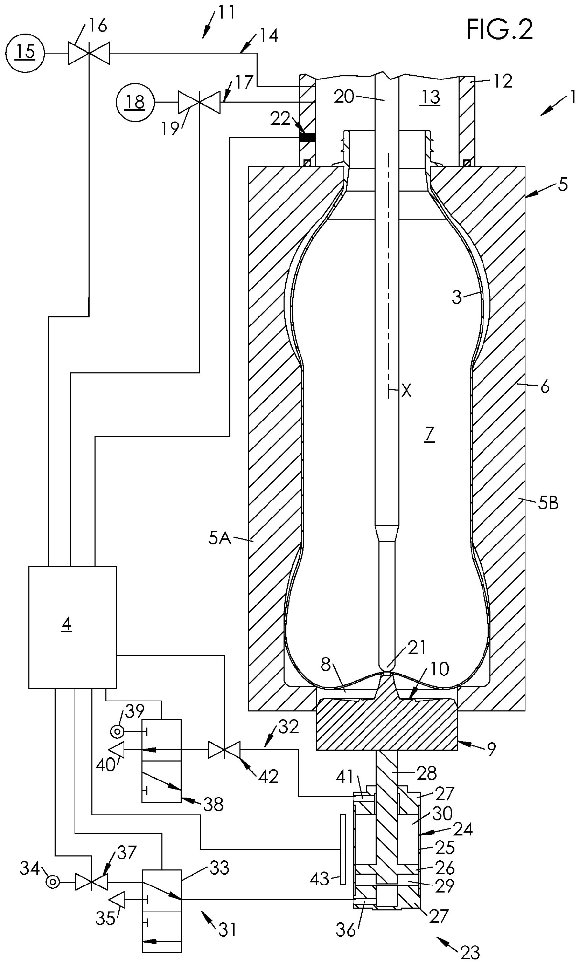

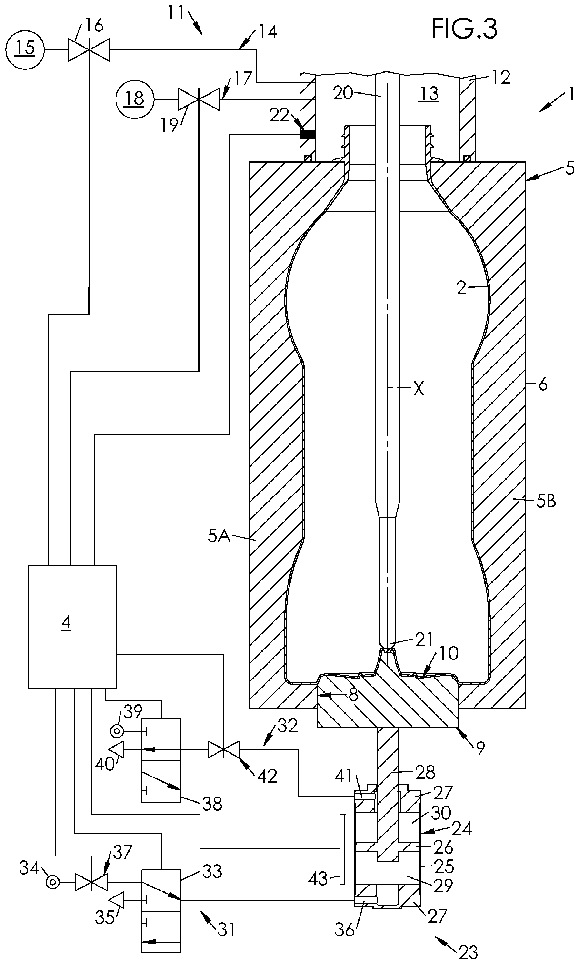

La FIG.2 montre le récipient en cours de formage. Le récipient 2 achevé est visible sur la FIG.3. Les FIGS.1 à 3 montrent par ailleurs les différentes positions que peut occuper le système de boxage lors de la fabrication d'un récipient.

En pratique, l'unité 1 de formage peut être montée, avec d'autres unités 1 de formage semblables, sur un carrousel tournant d'une machine de formage.

L'unité 1 de formage est pilotée de manière automatique par exemple par une unité 4 de contrôle comprenant au moins un contrôleur (par exemple du type API - acronyme d'Automate programmable industriel) équipé d'actionneurs.

L'unité 1 de formage comprend, en premier lieu, un moule 5 muni d'une paroi 6 définissant une cavité 7 à l'empreinte du récipient 2 à former, qui s'étend selon un axe X principal et présente une ouverture 8, et d'un insert 9 monté mobile dans l'ouverture 8 par rapport à la paroi 6. L'insert 9 est muni d'une surface 10 interne à l'empreinte d'une réserve à former en creux sur le récipient 2. Selon un mode de réalisation illustré sur les dessins, cette réserve est un fond du récipient 2, dont l'étirage supplémentaire procuré par la mobilité de l'insert 9 lors du formage conduit à une meilleure rigidité structurelle grâce à une augmentation de la cristallinité de la matière. Dans l'exemple illustré par les figures, l'insert 9 constitue donc un fond de moule et l'ouverture 8 est réalisée axialement dans la partie basse de la paroi 6. Dans un tel cas, la surface 10 interne de l'insert 9 est à l'empreinte d'une réserve à former en creux sur le fond du récipient 2.

Dans une variante, non représentée, la réserve en creux est par exemple destinée à former une poignée ou accueillir une poignée rapportée sur le récipient 2. Dans ce cas, l'insert serait disposé sur un côté de la paroi 6, et l'ouverture serait réalisée radialement sur ce côté. Le mode de fonctionnement d'un tel insert serait le même que celui exposé ci-après où l'insert 9 est un fond de moule.

L'insert **9** est monté mobile par rapport à la paroi **6** entre :

- Une position rétractée (ou basse, dans le cas où il constitue un fond de moule), illustrée sur la **FIG.1**, dans laquelle l'insert **9** s'étend en retrait par rapport à la cavité **7** en étant écarté de l'ouverture **8**, et
- Une position déployée (ou haute, dans le cas où il constitue un fond de moule), illustrée sur la **FIG.3**, dans laquelle l'insert **9** fait au moins en partie saillie dans la cavité **7**.

En pratique, dans la position déployée, l'insert **9** (respectivement le fond de moule) obture l'ouverture **8**, et la surface **10** interne ferme la cavité **7** en complétant ainsi l'empreinte du récipient **2**. On appelle « course » de l'insert **9** (respectivement du fond de moule) la distance, notée $H_E$, séparant sa position rétractée (ou basse) de sa position déployée (ou haute). La position basse de l'insert **9**, dans le cas où il s'agit d'un fond de moule, est illustrée sur la **FIG.1**, et sa position haute est illustrée sur la **FIG.3**. Sur la **FIG.2**, l'insert est représenté dans une position intermédiaire entre sa position basse et sa position haute.

Le moule **5** est par exemple du type portefeuille et comprend deux demi-moules **5A**, **5B** qui sont articulés autour d'une charnière commune et qui s'ouvrent pour permettre, successivement, l'évacuation d'un récipient **2** formé et l'introduction d'une ébauche **3**, après que celle-ci ait été préalablement chauffée dans une machine de conditionnement thermique placée en amont de la machine de formage.

Chaque unité **1** de formage comprend, en deuxième lieu et de façon connue en soi, un dispositif **11** d'injection comprenant une tuyère **12** définissant une chambre **13** d'injection. La tuyère **12** est montée à l'aplomb du moule **5**. La tuyère **12** est mobile axialement par rapport au moule **5** entre une position désaccouplée, dans laquelle elle est écartée du moule **5** pour permettre successivement l'évacuation de celui-ci d'un récipient **2** formé et l'introduction dans celui-ci d'une ébauche **3**, et une position accouplée (illustrée sur les **FIG.1**, **FIG.2** et **FIG.3**), dans laquelle elle est appliquée de manière étanche contre le moule **5** autour de l'ébauche **3**, afin d'assurer la mise en communication fluidique de la chambre **13** d'injection avec l'intérieur de l'ébauche **3**.

Le dispositif **11** d'injection comprend par ailleurs un circuit **14** fluidique de présoufflage, qui relie la chambre **13** d'injection à une source **15** de fluide à une pression dite de présoufflage, par l'intermédiaire d'une électrovanne **16** de présoufflage pilotée par l'unité **4** de contrôle. En pratique, le fluide est un gaz, tel que de l'air. La pression de présoufflage est par exemple comprise entre 5 et 16 bars.

Le dispositif **11** d'injection comprend en outre un circuit **17** fluidique de soufflage, qui relie la chambre **13** d'injection à une source **18** de fluide à une pression dite de soufflage, supérieure à la pression de présoufflage, par l'intermédiaire d'une électrovanne **19** de soufflage pilotée par l'unité **4** de contrôle. En pratique, le fluide est de l'air. La pression de soufflage est par exemple comprise entre 20 et 40 bars. Le dispositif **11** d'injection comprend, enfin, un circuit de dégazage de fluide (non représenté) qui relie la chambre **13** d'injection à l'air libre, par l'intermédiaire d'une électrovanne de mise à l'air également pilotée par l'unité **4** de contrôle.

Chaque unité **1** de formage comprend, en troisième lieu, une unité d'étirage équipée d'une tige **20** d'étirage qui s'étend suivant l'axe **X** du moule **5** et jusqu'à une extrémité **21** distale arrondie et est montée mobile axialement par rapport au moule **5**. La tige **20** s'étend axialement au travers de la tuyère **12**, de manière étanche.

L'unité **1** de formage comprend également un capteur **22** de pression monté sur la tuyère **12** pour mesurer, le cas échéant, la pression régnant dans la chambre **13** d'injection, qui est identique à celle régnant dans la l'ébauche **3** puis dans le récipient **2**. Le capteur **22** est relié à l'unité **4** de contrôle qui en mémorise les valeurs à chaque instant (suivant une période prédéterminée, par exemple de l'ordre de quelques millisecondes).

L'unité **1** de formage comprend, en quatrième lieu, un système **23** de boxage pour le déplacement de l'insert **9** (respectivement du fond de moule lorsque l'insert **9** constitue un tel fond de moule). Selon un mode de réalisation illustré sur la figure 1, ce système **23** de boxage comprend un vérin **24** muni d'une chemise **25** cylindrique et d'un piston **26** monté coulissant dans la chemise **25** entre deux parois **27** d'extrémité. Le piston **26** est solidaire d'une tige **28** sur laquelle est monté l'insert **9**. La fixation de l'insert **9** sur la tige **28** peut être réalisée de manière classique, typiquement par vissage.

Le piston **26** et la tige **28** sont solidairement mobiles par rapport à la chemise **25** entre une position rétractée, correspondant à la position rétractée de l'insert **9** (respectivement du fond de moule) (**FIG.1**), et une position déployée, correspondant à la position déployée de l'insert **9** (respectivement du fond de moule) (**FIG.3**).

Dans l'exemple illustré, le vérin **24** est du type double effet. La chemise **25** délimite, de part et d'autre du piston, une chambre **29** primaire et une chambre **30** secondaire.

Le système **23** de boxage comprend, pour commander le vérin **24**, au moins un circuit **31** fluidique primaire. Le vérin **24** est avantageusement du type double-effet ; dans ce cas, le système **23** de boxage comprend également un circuit **32** fluidique secondaire.

Selon un mode préféré de réalisation, le circuit **31** fluidique primaire comprend un distributeur **33** primaire du type 3/2 (trois orifices, deux positions) piloté par l'unité **4** de contrôle. Le distributeur **33** primaire présente une première entrée par laquelle il est relié à une source **34** primaire de fluide sous pression (qui peut être confondue avec la source **18** de fluide à la pression de soufflage) et une deuxième entrée par laquelle il est relié à une évacuation **35**.

Le distributeur **33** primaire présente par ailleurs une sortie par laquelle il est relié à la chambre **29** primaire, via un orifice **36** primaire pratiqué dans la paroi **25** inférieure.

Selon un mode de réalisation préféré illustré sur les **FIG.1**, **FIG.2** et **FIG.3**, le système **23** de boxage comprend une électrovanne **37** primaire interposée sur le circuit **31** fluidique primaire entre le vérin **24** et la source **34** primaire ; l'électrovanne **37** primaire est reliée à l'unité **4** de contrôle qui en assure la commande. Dans l'exemple illustré, l'électrovanne **37** primaire est interposée entre la source **34** primaire et la première entrée du distributeur **33** primaire.

L'électrovanne **37** primaire est à débit variable ; elle a pour fonction de faire varier la pression dans la chambre **29** primaire, suivant une consigne de débit imposée (et réglée) par l'unité **4** de contrôle.

La variation de pression dans la chambre **29** primaire induit une variation de la vitesse de déplacement du piston **26**, et donc de l'insert **9** (respectivement du fond de moule) qui lui est solidaire.

En pratique, l'électrovanne **37** définit pour le fluide en provenance de la source **34** primaire une section de passage variable en fonction d'un signal électrique de consigne appliqué à l'électrovanne **37** par l'unité **4** de contrôle.

Le circuit **32** fluidique secondaire comprend de préférence un distributeur **38** secondaire du type 3/2 piloté par l'unité **4** de contrôle. Le distributeur **38** secondaire présente une première entrée par laquelle il est relié à une source **39** secondaire de fluide sous pression (qui peut être confondue avec la source **18** de fluide à la pression de soufflage et avec la source **34** primaire) et une deuxième entrée par laquelle il est relié à une évacuation **40**.

Le distributeur **38** secondaire présente par ailleurs une sortie par laquelle il est relié à la chambre **30** secondaire, via un orifice **41** secondaire.

Selon un mode de réalisation illustré sur les **FIG.1**, **FIG.2** et **FIG.3**, le système **23** de boxage comprend en outre une électrovanne **42** secondaire interposée sur le circuit **32** fluidique secondaire entre le vérin **24** et la source **39** secondaire. L'électrovanne **42** secondaire est reliée à l'unité **4** de contrôle qui en assure la commande. Dans l'exemple illustré, l'électrovanne **42** secondaire est interposée entre le vérin (et plus précisément entre l'orifice **41** secondaire) et le distributeur **38** secondaire.

L'électrovanne **42** secondaire est à débit variable ; elle a pour fonction de moduler la pression du fluide présent dans la chambre **30** secondaire, et donc de contribuer à moduler la vitesse de déplacement du piston **26** et de l'insert **9** (respectivement du fond de moule) qui lui est solidaire).

L'unité **1** de formage comprend, enfin, un capteur **43** de position de l'insert **9** (respectivement du fond de moule), relié à l'unité **4** de contrôle. L'insert **9** (respectivement le fond de moule) étant solidaire du piston **26**, le capteur **43** peut mesurer la position de celui-ci. Il peut s'agir d'un capteur capacitif, d'un capteur magnétique, ou encore d'un capteur optique.

Lorsque l'insert **9** est un fond de moule, la tige **20** d'étirage est maintenue en contact avec le fond de moule (la matière du fond du récipient **2** étant prise en sandwich entre eux) pendant la phase de boxage, la mesure de la position de l'insert **9** constituant le fond de moule peut, en variante, être réalisée par la mesure de la position de la tige **20**, comme décrit dans la demande de brevet français FR 2 998 207 ou son équivalent international WO 2014/080109.

La fabrication d'un récipient **2** à partir d'une ébauche **3** (notamment une préforme) pendant un cycle de formage comprend d'abord une phase préliminaire d'introduction de l'ébauche **3** dans le moule **5**, qui est effectuée lorsque le moule est en position ouverte et l'insert **9** en position basse lorsque celui-ci est un fond de moule. Avant son introduction dans le moule **5**, l'ébauche **3** a d'abord subi une chauffe à une température supérieure à la température de transition vitreuse de la matière (environ 80°C dans le cas du PET) pour présenter une certaine malléabilité.

Puis, le moule **5** est fermé et survient ensuite une phase de présoufflage de l'ébauche **3**, qui comprend l'injection dans celle-ci de fluide à la pression de présoufflage.

A cet effet, l'unité **4** de contrôle commande l'ouverture de l'électrovanne **16** de présoufflage pour mettre en communication fluidique la source **15** de fluide à la pression de présoufflage avec la chambre **13** d'injection (et donc avec l'ébauche **3**).

Lorsqu'un étirage est prévu, la phase de présoufflage comprend, avant l'injection précitée, la descente de la tige **20** jusqu'au fond de l'ébauche **3**. Dans ce cas, l'injection de fluide débute dès lors que la tige **20** atteint le fond de l'ébauche **3**. La vitesse de descente de la tige **20** est telle qu'elle demeure en contact avec le fond de l'ébauche **3** jusqu'à atteindre l'insert **9** constituant le fond de moule.

Le présoufflage provoque le gonflement de l'ébauche **3** jusqu'à ce qu'elle vienne en contact incomplet avec la paroi **6** et l'insert **9** constituant le fond de moule, la pression de présoufflage n'étant pas suffisante pour plaquer intimement l'ébauche **3** contre la paroi **6**. En d'autres termes, la prise d'empreinte n'est pas achevée à l'issue de la phase de présoufflage.

C'est pourquoi il est prévu, consécutivement à la phase de présoufflage, une phase de soufflage, qui comprend l'injection dans l'ébauche **3** du fluide à la pression de soufflage ; à cet effet, l'unité **4** de contrôle commande la fermeture de l'électrovanne **16** de présoufflage et l'ouverture de l'électrovanne **19** de soufflage pour mettre en communication fluidique la source **18** de fluide à la pression de soufflage avec la chambre **13** d'injection (et donc avec l'ébauche **3**). La fermeture de l'électrovanne **16** de présoufflage est commandée par l'unité **4** de contrôle simultanément à (ou avec un léger retard sur) la commande d'ouverture de l'électrovanne **19** de soufflage.

Comme illustré sur les dessins, il est en outre prévu une phase de boxage qui comprend le déplacement de l'insert **9** constituant le fond de moule de sa position basse vers sa position haute. Dans la position basse, l'orifice **36** primaire du vérin **24** est en communication fluidique avec l'évacuation **35**, et la chambre **30** secondaire en communication fluidique avec la source **39** secondaire de fluide sous pression. Pour déplacer l'insert **9** constituant le fond moule vers sa position haute, l'unité **4** de contrôle pilote :

- Le distributeur **33** primaire pour placer l'orifice **36** primaire du vérin **24** en communication fluidique avec la source **34** primaire de fluide ;
- Le distributeur **38** secondaire pour placer l'orifice **41** secondaire en communication fluidique avec l'évacuation **40** ;
- L'électrovanne **37** primaire pour régler le débit de fluide dans le circuit **31** fluidique primaire (et donc la pression dans la chambre **29** primaire) ;
- Le cas échéant, l'électrovanne **42** secondaire, pour régler le débit de fluide dans le circuit **32** fluidique secondaire (et donc la contrepression dans la chambre **30** secondaire).

Le piston **26** est alors repoussé vers sa position haute sous la pression du fluide dans la chambre **29** primaire, à l'encontre de l'effort résistant du fluide de la chambre **30** secondaire.

L'unité **4** de contrôle commande l'électrovanne **37** primaire (et éventuellement l'électrovanne **42** secondaire) pour, en modulant son débit, moduler la vitesse de déplacement du piston **26** (et donc de l'insert **9** constituant le fond de moule).

Il est, à cet effet, prévu une phase de mesure, en temps réel, de la position de l'insert **9**. Ces positions sont mesurées au moyen du capteur **43** de position. Les valeurs de la position de l'insert **9** sont mémorisées dans l'unité **4** de contrôle (ou dans une mémoire à laquelle l'unité **4** de contrôle peut accéder).

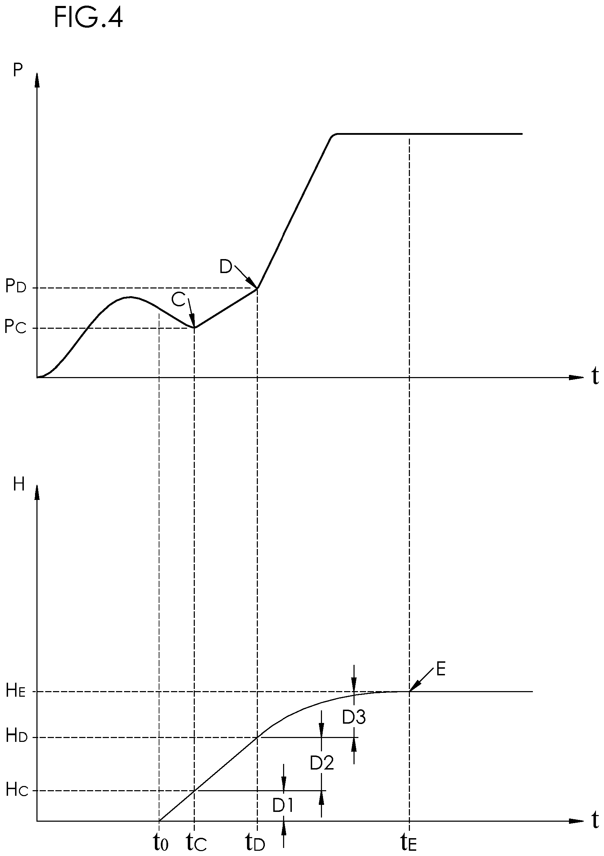

Il est alors prévu une phase de construction, à partir des valeurs de la position de l'insert **9** ainsi mémorisées, d'une courbe dite de boxage caractérisant les variations de la position (notée **H**) de l'insert **9** en fonction du temps. Cette courbe est illustrée par le diagramme du bas de la **FIG.4**. Par convention, en position rétractée de l'insert **9**, **H** est nulle ; en position déployée, **H** est égal à $H_E$.

Cette courbe de boxage va permettre, par une rétroaction tenant compte de certains paramètres du présoufflage et/ou du soufflage, et en tenant compte en outre de paramètres du boxage mesurés en temps réel, de modifier si nécessaire la vitesse de déplacement de l'insert **9** en agissant au moins sur le débit de l'électrovanne **37** primaire.

A cet effet, il est tenu compte d'une courbe de soufflage de référence, illustrée par le diagramme du haut de la **FIG.4**, caractérisant les variations de la pression régnant dans l'ébauche **3** pendant le présoufflage et le soufflage.

Dans une mise en œuvre, pour chaque modèle de récipient **2** destiné à être fabriqué au sein de l'unité 1 de formage, la courbe de soufflage de référence caractérisant les variations de la pression régnant dans l'ébauche **3** en fonction du temps est élaborée lors de la mise au point de l'équipement intégrant cette unité **1**.

Plus précisément, on prend en compte, sur la courbe de soufflage :

- un premier point **C** d'inflexion à partir duquel, pendant le présoufflage, la pression est strictement croissante ;
- un deuxième point **D** d'inflexion postérieur au point **C** et à partir duquel la pente de la courbe de soufflage présente un accroissement.

Le point **C** caractérise le contact de la matière de l'ébauche avec la paroi **6** du moule **5**. A partir de ce point **C**, la pression dans l'ébauche **3** est strictement croissante (et de manière linéaire, comme illustré sur la courbe de soufflage en haut sur la **FIG.4**) car le volume de l'ébauche **3** ne varie plus (ou de manière négligeable) tandis que du fluide continue d'y être injecté. On note $t_C$ l'instant décrété correspondre au point **C** sur la courbe de soufflage.

Le point **D** caractérise la croissance de la pression consécutive à l'initiation de la phase de soufflage, à volume sensiblement constant, et avant que la pression dans le récipient **2** ne s'équilibre avec la pression régnant dans la source **18** (c'est-à-dire que la pression dans le récipient **2** atteint la pression de soufflage). On note $t_D$ l'instant décrété correspondre au point **D** sur la courbe de soufflage.

Comme on le voit sur la **FIG.4**, la phase de boxage est initiée pendant la phase le présoufflage.

On note $t_0$ l'instant, dit de début de boxage, à partir duquel l'insert **9** quitte sa position rétractée et commence à se déplacer en direction de sa position déployée (en d'autres termes, à partir duquel **H** est non nulle).

On note E le point, sur la courbe de boxage, où H= $H_E$, c'est-à-dire où l'insert **9** atteint sa position déployée. On note $t_E$ l'instant correspondant (instant de fin de boxage).

Par ailleurs, on note $H_C$ la position de l'insert **9** à l'instant $t_C$ et $H_D$ la position de l'insert **9** à l'instant $t_D$.

La position, ainsi que la vitesse, de l'insert **9** pendant la phase de boxage varient continûment. Cependant on distingue, dans la phase de boxage, trois étapes :

- Une étape initiale, entre l'instant $t_0$ et l'instant $t_C$, pendant laquelle l'insert **9** parcourt une distance initiale notée **D1** (D1= $H_C$) ;
- Une étape intermédiaire, entre l'instant $t_C$ et l'instant

$t_D$, pendant laquelle l'insert **9** parcourt une distance intermédiaire notée **D2** (**D2**= $H_D$ - $H_C$) ;

- Une étape finale, entre l'instant $t_D$ et l'instant $t_E$, pendant laquelle l'insert **9** parcourt une distance finale notée **D3** (**D3**= $H_E$ - $H_D$).

Grâce au capteur **43** de position, on détecte (en pratique, c'est l'unité **4** de contrôle qui est chargée de cette détection), sur la courbe de boxage :

- L'instant $t_0$ ;
- L'instant $t_E$.

Puis on mesure (par l'unité **4** de contrôle) les distances **D1**, **D2** et **D3** effectivement parcourues par l'insert **9**.

Ces distances sont comparées (par l'unité **4** de contrôle) avec des distances nominales **D1th**, **D2th**, **D3th** respectives prédéterminées.

Si l'une au moins des distances **D1**, **D2** ou **D3** mesurées est décrétée (par l'unité **4** de contrôle) différente de la distance nominale **D1th**, **D2th**, **D3th** correspondante, c'est signe que le déplacement de l'insert **9** ne correspond pas au déplacement souhaité. On fait cependant la supposition que l'instant $t_0$ de début de boxage est correct.

Dans une mise en œuvre, une distance **D1, D2, D3** mesurée est décrétée différente de la distance nominale **D1th, D2th, D3th** correspondante dès lors que la distance mesurée est différente de la distance nominale, soit :

$$D1th \neq D1$$

et/ou

$$D2th \neq D2$$

et/ou

$$D3th \neq D3.$$

Toutefois, de préférence, une tolérance est admissible et une distance **D1, D2, D3** mesurée est décrétée différente de la distance nominale **D1th, D2th, D3th** correspondante si l'écart entre ces deux distances est supérieur ou égal à 5% de la valeur de la distance nominale, soit :

$$|D1th - D1| \geq 0,05 \ D1th$$

et/ou

$$|D2th - D2| \geq 0,05 \ D2th$$

et/ou

$$|D3th - D3| \geq 0,05 \ D3th$$

En d'autres termes, une distance **D1, D2, D3** mesurée est décrétée équivalente à la distance nominale **D1th, D2th, D3th** correspondante si l'écart entre ces deux distances est inférieur ou égal à 5%, soit :

$$0.95 \ D1th \leq D1 \leq 1,05 \ D1th$$

et/ou

$$0.95 \ D2th \leq D2 \leq 1,05 \ D2th$$

et/ou

$$0.95 \ D3th \leq D3 \leq 1,05 \ D3th$$

Si **D1**<**D1th**, c'est que la vitesse de l'insert **9** pendant l'étape initiale est inférieure à la vitesse souhaitée, et il convient de l'augmenter. A cet effet, la consigne de débit de l'électrovanne **37** primaire est revue à la hausse par l'unité **4** de contrôle en vue de l'étape initiale du cycle suivant ; de la sorte avec une vitesse supérieure, la distance parcourue pendant un intervalle de temps donné augmente.

Si, au contraire, **D1**>**D1th**, c'est que la vitesse de l'insert **9** pendant l'étape initiale est supérieure à la vitesse souhaitée, et il convient de la diminuer. A cet effet, la consigne de débit de l'électrovanne **37** primaire est revue à la baisse par l'unité **4** de contrôle en vue de l'étape initiale du cycle suivant ; de la sorte avec une vitesse inférieure, la distance parcourue pendant un intervalle de temps donné diminue.

Si **D1**≅**D1th**, et si **D2**<**D2th**, c'est que la vitesse de l'insert **9** pendant l'étape intermédiaire est inférieure à la vitesse souhaitée, et il convient de l'augmenter. A cet effet, la consigne de débit de l'électrovanne **37** primaire est revue à la hausse par l'unité **4** de contrôle en vue de l'étape intermédiaire du cycle de fabrication suivant.

Si, au contraire, **D2**>**D2th**, c'est que la vitesse de l'insert **9** pendant l'étape intermédiaire est supérieure à la vitesse souhaitée, et il convient de la diminuer. A cet effet, la consigne de débit de l'électrovanne **37** primaire est revue à la baisse par l'unité **4** de contrôle en vue de l'étape intermédiaire du cycle de fabrication suivant.

Quant à la distance **D3**, elle dépend de **D1** et **D2** : **D3**= $H_E$ -**D1**-**D2**. De sorte que si **D1**≅**D1th** et si **D2**≅**D2th**, alors **D3**≅**D3th** puisque $H_E$ est fixe. Il est, certes, possible de ne commander une modification de débit de l'électrovanne **37** primaire que dans l'hypothèse où cette distance **D3** serait décrétée différente de la distance nominale **D3th** correspondante ; toutefois, dans ce cas, le débit de l'électrovanne 37 doit être modifié dès l'étape intermédiaire du cycle de fabrication suivant.

En effet, si **D3<D3th**, cela signifie que la vitesse de déplacement de l'insert **9** pendant l'étape initiale et/ou pendant l'étape intermédiaire est supérieure à la vitesse souhaitée, et qu'il convient de la diminuer l'étape initiale et/ou l'étape intermédiaire du cycle suivant. A cet effet, la consigne de débit de l'électrovanne **37** primaire est revue à la baisse par l'unité **4** de contrôle en vue de l'étape initiale et/ou de l'étape intermédiaire du cycle de fabrication suivant.

Au contraire, si **D3>D3th**, cela signifie que la vitesse de déplacement de l'insert **9** pendant l'étape initiale et/ou pendant l'étape intermédiaire est inférieure à la vitesse souhaitée, et qu'il convient de l'augmenter pour l'étape initiale et/ou l'étape intermédiaire du cycle de fabrication suivant.

Ces modifications permettent d'apporter des corrections à la vitesse de déplacement de l'insert **9** aux cycles de fabrication suivants. Il est possible que, dès lors qu'une dérive est constatée par détection d'une différence entre l'une au moins des distances **D1**, **D2**, **D3** mesurées et la distance nominale **D1th**, **D2th, D3th** respective, plusieurs cycles de fabrication successifs soient nécessaires pour recaler sur la distance nominale **D1th**, **D2th** ou **D3th** respective la (les) distance(s) **D1**, **D2** ou **D3** mesurée(s) ayant divergé.

Selon un premier mode de réalisation, on suppose que pour un récipient **2** donné, la phase de présoufflage est conforme, c'est-à-dire qu'elle ne présente pas de décalage notoire (temporel ou en pression) par rapport à un modèle de présoufflage prédéterminé, et on suppose en outre que la phase de soufflage est conforme, c'est-à-dire qu'elle ne présente pas de décalage notoire (temporel ou en pression) par rapport à un modèle de soufflage prédéterminé.

Dans ce cas, la courbe de soufflage dont il est tenu compte peut être la courbe de référence susmentionnée, élaborée lors de la mise au point de l'équipement destiné à fabriquer le récipient **2** en question ; les points **C** et **D** sont des points théoriques de cette courbe, définis comme indiqué précédemment ; leurs instants d'occurrence respectifs, $t_C$ et $t_D$, sont prédéterminés et identiques pour chaque cycle de fabrication. Il en va de même de leurs pressions respectives théoriques correspondantes, notées **PC** et **PD**.

En théorie, à l'instant $t_C$, l'insert **9** est supposé avoir parcouru la première distance **D1** ; à l'instant $t_D$, il est supposé avoir parcouru en plus la deuxième distance **D2** ; à l'instant $t_E$, il est supposé avoir parcouru en plus la troisième distance **D3**.

Dans ce cas, il est possible de piloter l'électrovanne **37** primaire de manière temporelle, c'est-à-dire sur la seule base des mesures de :

- la distance **D1** parcourue entre les instants $t_0$ et $t_C$ (auquel l'insert **9** est, en théorie, supposé avoir parcouru la première distance **D1**) ;
- la distance **D2** parcourue entre les instants $t_C$ et $t_D$ (auquel l'insert **9** est, en théorie, supposé avoir parcouru la deuxième distance **D2**) ;
- la distance **D3** parcourue entre les instants $t_D$ et $t_E$ (auquel l'insert **9** est, en théorie, supposé avoir parcouru la troisième distance **D3**).

Dans ce cas, $t_C$ et $t_D$ sont des instants mémorisés au préalable sans qu'il soit nécessaire de les déduire d'une courbe de soufflage réelle à partir d'une détection des points **C** et **D**.

En variante, il est possible de piloter l'électrovanne **37** primaire en pression, c'est-à-dire à partir des pressions théoriques **PC** et **PD**, mémorisées dans l'unité **4** de contrôle, en mesurant :

- la distance **D1** parcourue entre les instants $t_0$ et l'instant auquel la pression mesurée dans l'ébauche **3** atteint la valeur **PC** telle que mémorisée ;
- la distance **D2** parcourue entre l'instant auquel la pression mesurée dans l'ébauche **3** atteint la valeur **PC** telle que mémorisée et l'instant auquel la pression mesurée dans l'ébauche **3** atteint la valeur **PD** telle que mémorisée ;
- la distance **D3** parcourue entre l'instant auquel la pression mesurée dans l'ébauche **3** atteint la valeur **PD** telle que mémorisée et l'instant $t_E$.

Cependant il est envisageable de caler les mesures sur les points **C** et **D** réels, détectés sur une courbe de soufflage établie à partir de mesures de pression effectuées en temps réel dans l'ébauche **3**.

Dans ce cas, et selon un deuxième mode de réalisation, la phase de mesure comprend la mesure en temps réel de la pression régnant dans l'ébauche **3** pendant les phases de présoufflage et de soufflage.

La phase de construction comprend alors la construction d'une courbe de soufflage (**FIG.4**) caractérisant les variations - réelles - de la pression régnant dans l'ébauche **3** en fonction du temps, laquelle courbe de pression réelle devient la courbe de soufflage de référence.

Dans ce cas, les points **C** et **D** sont effectivement détectés sur la courbe de soufflage de référence ainsi construite.

Il résulte de ce procédé une amélioration de la précision de réglage de la position (ou de la vitesse) instantanée de l'insert **9** pendant le boxage, au bénéfice de la qualité des récipients **2** produits.

En effet, les points **C** et **D** sont des points singuliers de la courbe de soufflage qui caractérisent des instants respectifs $t_C$ et $t_D$ importants du formage. Plus précisément, ils marquent des phases de croissance, d'abord lente (point **C**) puis rapide (point **D**), de la pression dans l'ébauche **3**, et donc des efforts résistants qui s'exercent sur l'insert **9** et s'opposent à son déplacement.

Il est donc apparu important de vérifier qu'à ces instants $t_C$ et $t_D$ (qu'ils soient prédéterminés à partir d'une courbe de soufflage de référence théorique ou à partir d'une courbe de soufflage de référence construite en temps réel) la position (ou la vitesse) de l'insert **9** est correcte et, si elle ne l'est pas, de la corriger pour la recaler sur une valeur correcte.

**Revendications**

1. Procédé de fabrication d'un récipient (**2**) à partir d'une ébauche (**3**) en matière plastique, au sein d'une unité (**1**) de formage comprenant :

   - Un moule (**5**) muni d'une paroi (**6**) définissant une cavité (**7**) à l'empreinte du récipient (**2**) et d'un insert (**9**) mobile, par rapport à la paroi (**6**), entre une position rétractée, dans laquelle l'insert (**9**) est en retrait par rapport à la cavité (**7**), et une position déployée, dans laquelle l'insert (**9**) fait au moins en partie saillie dans la cavité (**7**),
   - un système (**23**) de boxage comprenant un vérin (**24**), sur lequel est monté l'insert (**9**), un circuit (**31**) fluidique reliant le vérin (**24**) à une source (**34**) de fluide sous pression, et une électrovanne (**37**) interposée sur le circuit (**31**) fluidique entre le vérin (**24**) et la source (**34**) de fluide sous pression ;
   - une unité (**4**) de contrôle reliée à l'électrovanne (**37**) et programmée pour en faire varier des consignes de débit afin de piloter le déplacement de l'insert ;

   ce procédé comprenant :

   - une phase de présoufflage, qui comprend l'injection, dans l'ébauche (**3**) préalablement introduite dans le moule (**5**), d'un fluide à une pression de présoufflage ;
   - une phase de soufflage postérieure à la phase de présoufflage, qui comprend l'injection, dans l'ébauche (**3**), d'un fluide à une pression de soufflage supérieure à la pression de présoufflage ;
   - une phase de boxage, qui comprend le déplacement de l'insert (**9**) de sa position rétractée vers sa position déployée pendant l'une au moins des phases précitées de présoufflage ou de soufflage ;
   - une phase de mesure, en temps réel, de la position de l'insert (**9**), les valeurs de la position de l'insert (**9**) étant mémorisées ;
   - une phase de construction, à partir des valeurs de la position de l'insert (**9**) ainsi mémorisées, d'une courbe dite de boxage caractérisant les variations de la position de l'insert (**9**) en fonction du temps ;

   ce procédé étant **caractérisé en ce qu'**il comprend les opérations consistant à :

   - prendre en compte, sur une courbe de soufflage de référence caractérisant les variations de la pression régnant dans l'ébauche (**3**) pendant le présoufflage et le soufflage ;

     • un premier point (**C**) d'inflexion à partir duquel, pendant le présoufflage, la pression est strictement croissante ;
     • un deuxième point (**D**) d'inflexion postérieur au point (**C**) et à partir duquel la pente de la courbe présente un accroissement ;

   - détecter sur la courbe de boxage :

     • un instant ($t_0$) de début de boxage marquant le début du déplacement de l'insert (**9**) ;
     • un instant ($t_E$) de fin de boxage marquant l'arrivée de l'insert (**9**) en fin de course ;

   - mesurer :

     • une première distance (**D1**) parcourue par l'insert (**9**) dans un premier intervalle de temps compris entre l'instant ($t_0$) de début de boxage et un instant ($t_C$) décrété correspondre au premier point (**C**) d'inflexion de la courbe de soufflage de référence ;
     • une deuxième distance (**D2**) parcourue par l'insert (**9**) dans un second intervalle de temps compris entre l'instant ($t_C$) décrété correspondre au premier point (**C**) d'inflexion et un instant ($t_D$) décrété correspondre au deuxième point (**D**) d'inflexion de la courbe de soufflage de référence ;
     • une troisième distance (**D3**) parcourue par l'insert (**9**) dans un troisième intervalle de temps compris entre l'instant ($t_D$) décrété correspondre au deuxième point (**D**) d'inflexion de la courbe de soufflage de référence et l'instant ($t_E$) de fin de boxage ;

   - comparer les distances (**D1 ; D2 ; D3**) mesurées avec des distances nominales (**D1th ; D2th ; D3th**) respectives prédéterminées ;
   - si l'une au moins des distances (**D1 ; D2 ; D3**) mesurées est décrétée différente de la distance nominale (**D1th ; D2th ; D3th**) correspondante, commander, par l'unité (**4**) de contrôle, pour le cycle de fabrication suivant dans la dite unité, une modification de la consigne du débit de l'électrovanne (**37**) dans chaque intervalle de temps où une différence a été relevée.

**2.** Procédé selon la revendication 1, **caractérisé en ce qu'**une distance (**D1 ; D2 ; D3**) mesurée est décrétée différente de la distance nominale (**D1th ; D2th ; D3th**) correspondante dès lors que la distance mesurée est différente de la distance nominale, soit :

$$D1th \neq D1$$

et/ou

$$D2th \neq D2$$

et/ou

$$D3th \neq D3$$

**3.** Procédé selon la revendication 1, **caractérisé en ce qu'**une distance (**D1 ; D2 ; D3**) mesurée est décrétée différente de la distance nominale (**D1th ; D2th ; D3th**) correspondante si l'écart entre la distance mesurée et la distance nominale est supérieur ou égal à 5% de la valeur de la distance nominale, soit :

$$|D1th - D1| \geq 0,05 \; D1th$$

et/ou

$$|D2th - D2| \geq 0,05 \; D2th$$

et/ou

$$|D3th - D3| \geq 0,05 \; D3th$$

**4.** Procédé selon l'une des revendications précédentes, **caractérisé en ce que**, pour chaque modèle de récipient (**2**) destiné à être fabriqué au sein de l'unité (**1**) de formage, la courbe de soufflage de référence caractérisant les variations de la pression régnant dans l'ébauche (**3**) en fonction du temps est élaborée lors de la mise au point de l'équipement intégrant cette unité (**1**).

**5.** Procédé selon l'une des revendications 1 à 4, **caractérisé en ce que** :

- La première distance (**D1**) est mesurée dans un premier intervalle de temps compris entre l'instant ($t_0$) de début de boxage et un instant ($t_C$) prédéterminé auquel l'insert (**9**) est supposé avoir parcouru la première distance (**D1**) ;
- La deuxième distance (**D2**) est mesurée dans un second intervalle de temps compris entre l'instant ($t_C$) auquel l'insert (**9**) est supposé avoir parcouru la première distance (**D1**) et un instant ($t_D$) prédéterminé auquel l'insert (**9**) est supposé avoir parcouru la deuxième distance (**D2**) ;
- La troisième distance (**D3**) est mesurée dans un troisième intervalle de temps compris entre l'instant ($t_D$) auquel l'insert (**9**) est supposé avoir parcouru la deuxième distance (**D2**) et l'instant ($t_E$) de fin de boxage.

**6.** Procédé selon l'une des revendications 1 à 4, **caractérisé en ce que** :

- la phase de mesure comprend la mesure en temps réel de la pression régnant dans l'ébauche (**3**) pendant les phases de présoufflage et de soufflage,
- La première distance (**D1**) est mesurée dans un premier intervalle de temps compris entre l'instant (**t0**) de début de boxage et un instant auquel la pression dans l'ébauche atteint une valeur (**PC**) prédéterminée décrétée correspondre au premier point (**C**) d'inflexion ;
- La deuxième distance (**D2**) est mesurée dans un second intervalle de temps compris entre l'instant auquel la pression dans l'ébauche a atteint une valeur (**PC**) prédéterminée décrétée correspondre au premier point (**C**) d'inflexion et un instant auquel la pression dans l'ébauche (**3**) atteint une deuxième valeur (**PD**) prédéterminée décrétée correspondre au deuxième point (**D**) d'inflexion ;
- La troisième distance (**D3**) est mesurée dans un troisième intervalle de temps compris entre l'instant auquel la pression dans l'ébauche (**3**) a atteint la deuxième valeur (**PD**) prédéterminée, et l'instant ($t_E$) de fin de boxage.

**7.** Procédé selon l'une des revendications 1 à 3, **caractérisé en ce qu'**il comprend :

- Dans la phase de mesure, la mesure en temps réel de la pression régnant dans l'ébauche (**3**) pendant les phases de présoufflage et de soufflage, les valeurs de pression étant mémorisées ;
- Dans la phase de construction, la construction d'une courbe dite de soufflage caractérisant les variations de la pression régnant dans l'ébauche (**3**) en fonction du temps ;
- La détection du premier point (**C**) d'inflexion et du deuxième point (**D**) d'inflexion sur la courbe de soufflage de référence.

**8.** Procédé selon l'une des revendications précédentes, **caractérisé en ce que**, lorsqu'une distance (**D1 ; D2 ; D3**) mesurée est décrétée inférieure à la distance nominale (**D1t ; D2th ; D3th**) correspondante, l'unité (**4**) de contrôle commande, pour le cycle de fabrication suivant dans la dite unité, une augmentation de la consigne du débit de l'électrovanne (**37**) dans chaque intervalle de temps où une différence a été relevée.

9. Procédé selon l'une des revendications précédentes, **caractérisé en ce que**, lorsqu'une distance (**D1 ; D2 ; D3**) mesurée est décrétée supérieure à la distance nominale (**D1th ; D2th ; D3th**) correspondante, l'unité (**4**) de contrôle commande pour le cycle de fabrication suivant dans la dite unité, une diminution de la consigne du débit de l'électrovanne (**37**) dans chaque intervalle de temps où une différence a été relevée.

## Patentansprüche

1. Verfahren zur Herstellung eines Behälters (2) aus einem Rohling (3) aus Kunststoff innerhalb einer Formungseinheit (1), die Folgendes umfasst:

    - Eine Form (5), die mit einer Wand (6), die einen Hohlraum (7) mit dem Abdruck des Behälters (2) definiert, und einem Einsatz (9), der im Verhältnis zur Wand (6) zwischen einer eingefahrenen Position, in welcher der Einsatz (9) im Verhältnis zum Hohlraum (7) zurückgezogen ist, und einer ausgefahrenen Position bewegbar ist, in welcher der Einsatz (9) wenigstens teilweise in den Hohlraum (7) hineinragt, versehen ist,
    - ein Boxing-System (23), das einen Zylinder (24), auf dem der Einsatz (9) angebracht ist, einen Fluidkreislauf (31), der den Zylinder (24) mit einer Druckfluidquelle (34) verbindet, und ein Magnetventil (37), das im Fluidkreislauf (31) zwischen dem Zylinder (24) und der Druckfluidquelle (34) eingefügt ist, umfasst;
    - eine Steuereinheit (4), die mit dem Magnetventil (37) verbunden und dafür programmiert ist, dessen Durchsatzvorgaben zu variieren, um die Verschiebung des Einsatzes zu steuern;

    wobei dieses Verfahren Folgendes umfasst:

    - eine Vorblasphase, die das Einspritzen eines Fluids mit einem Vorblasdruck in den Rohling (3), der zuvor in die Form (5) eingeführt wurde, umfasst;
    - eine Blasphase nach der Vorblasphase, die das Einspritzen eines Fluids mit einem Blasdruck über dem Vorblasdruck in den Rohling (3) umfasst;
    - eine Boxing-Phase, die das Verschieben des Einsatzes (9) während wenigstens einer von der vorgenannten Vorblas- oder Blasphase aus seiner eingefahrenen Position zu seiner ausgefahrenen Position umfasst;
    - eine Phase des Messens der Position des Einsatzes (9) in Echtzeit, wobei die Werte der Position des Einsatzes (9) gespeichert werden;
    - eine Phase des Aufbauens, aus den so gespeicherten Werten der Position des Einsatzes (9), einer Boxing-Kurve, die die Variationen der Position des Einsatzes (9) in Abhängigkeit von der Zeit charakterisiert;

    wobei dieses Verfahren **dadurch gekennzeichnet ist, dass** es die Vorgänge umfasst, die in Folgendem bestehen:

    - Berücksichtigen, auf einer Referenzblaskurve, die die Variationen des Drucks charakterisiert, der während des Vorblasens und des Blasens im Rohling (3) herrscht;

        • eines ersten Wendepunkts (C), ab welchem der Druck während des Vorblasens streng zunehmend ist;
        • eines zweiten Wendepunkts (D), der sich hinter dem Punkt (C) befindet und ab welchem die Steigung der Kurve eine Zunahme aufweist;

    - Erfassen, auf der Boxing-Kurve:

        • eines Boxing-Anfangszeitpunkts (t0), der den Anfang der Verschiebung des Einsatzes (9) kennzeichnet;
        • eines Boxing-Endzeitpunkts (tE), der die Ankunft des Einsatzes (9) am Wegende kennzeichnet;

    - Messen:

        • einer ersten Strecke (D1), die vom Einsatz (9) in einem ersten Zeitintervall zwischen dem Boxing-Anfangszeitpunkt (t0) und einem Zeitpunkt (tC), der als dem ersten Wendepunkt (C) der Referenzblaskurve entsprechend bestimmt ist, zurückgelegt wird;
        • einer zweiten Strecke (D2), die vom Einsatz (9) in einem zweiten Zeitintervall zwischen dem Zeitpunkt (tC), der als dem ersten Wendepunkt (C) entsprechend bestimmt ist, und einem Zeitpunkt (tD), der als dem zweiten Wendepunkt (D) der Referenzblaskurve entsprechend bestimmt ist, zurückgelegt wird;
        • einer dritten Strecke (D3), die vom Einsatz (9) in einem dritten Zeitintervall zwischen dem Zeitpunkt (tD), der als dem zweiten Wendepunkt (D) der Referenzblaskurve entsprechend bestimmt ist, und dem Boxing-Endzeitpunkt (tE) zurückgelegt wird;

- Vergleichen der gemessenen Strecken (D1; D2; D3) mit den vorbestimmten jeweiligen Nominalstrecken (D1th; D2th; D3th) ;
- wenn wenigstens eine der gemessenen Strecken (D1; D2; D3) als von der entsprechenden Nominalstrecke (D1th; D2th; D3th) verschieden bestimmt ist, Befehlen, durch die Steuereinheit (4) für den nachfolgenden Herstellungszyklus in der Einheit, einer Änderung der Vorgabe des Durchsatzes des Magnetventils (37) in jedem Zeitintervall, in dem eine Differenz festgestellt wurde.

2. Verfahren nach Anspruch 1, **dadurch gekennzeichnet, dass** eine gemessene Strecke (D1; D2; D3) als von der entsprechenden Nominalstrecke (D1th; D2th; D3th) verschieden bestimmt ist, sobald die gemessene Strecke von der Nominalstrecke verschieden ist, das heißt:

$$D1th \neq D1$$

und/oder

$$D2th \neq D2$$

und/oder

$$D3th \neq D3$$

3. Verfahren nach Anspruch 1, **dadurch gekennzeichnet, dass** eine gemessene Strecke (D1; D2; D3) als von der entsprechenden Nominalstrecke (D1th; D2th; D3th) verschieden bestimmt ist, wenn die Abweichung zwischen der gemessenen Strecke und der Nominalstrecke größer oder gleich 5 % des Werts der Nominalstrecke ist, das heißt:

$$\left| D1th - D1 \right| \geq 0,05 \ D1th$$

und/oder

$$\left| D2th - D2 \right| \geq 0,05 \ D2th$$

und/oder

$$\left| D3th - D3 \right| \geq 0,05 \ D3th$$

4. Verfahren nach einem der vorhergehenden Ansprüche, **dadurch gekennzeichnet, dass** für jedes Modell eines Behälters (2), der innerhalb der Formungseinheit (1) hergestellt werden soll, die Referenzblaskurve, die die Variationen des Drucks, der im Rohling (3) herrscht, in Abhängigkeit von der Zeit charakterisiert, bei der Einstellung der Anlagen erstellt wird, die in dieser Einheit (1) enthalten sind.

5. Verfahren nach einem der Ansprüche 1 bis 4, **dadurch gekennzeichnet, dass**:

- Die erste Strecke (D1) in einem ersten Zeitintervall zwischen dem Boxing-Anfangszeitpunkt (t0) und einem vorbestimmten Zeitpunkt (tC), bei dem davon ausgegangen wird, dass der Einsatz (9) die erste Strecke (D1) zurückgelegt hat, gemessen wird;
- Die zweite Strecke (D2) in einem zweiten Zeitintervall zwischen dem Zeitpunkt (tC), bei dem davon ausgegangen wird, dass der Einsatz (9) die erste Strecke (D1) zurückgelegt hat, und einem vorbestimmten Zeitpunkt (tD), bei dem davon ausgegangen wird, dass der Einsatz (9) die zweite Strecke (D2) zurückgelegt hat, gemessen wird;
- Die dritte Strecke (D3) in einem dritten Zeitintervall zwischen dem Zeitpunkt (tD), bei dem davon ausgegangen wird, dass der Einsatz (9) die zweite Strecke (D2) zurückgelegt hat, und dem Boxing-Endzeitpunkt (tE) gemessen wird.

6. Verfahren nach einem der Ansprüche 1 bis 4, **dadurch gekennzeichnet, dass**:

- die Phase des Messens das Messen des Drucks in Echtzeit umfasst, der während der Vorblas- und Blasphasen im Rohling (3) herrscht,
- Die erste Strecke (D1) in einem ersten Zeitintervall zwischen dem Boxing-Anfangszeitpunkt (t0) und einem Zeitpunkt, zu dem der Druck im Rohling einen vorbestimmten Wert (PC) erreicht, der als dem ersten Wendepunkt (C) entsprechend bestimmt ist, gemessen wird;
- Die zweite Strecke (D2) in einem zweiten Zeitintervall zwischen dem Zeitpunkt, zu dem der Druck im Rohling einen vorbestimmten Wert (PC) erreicht hat, der als dem ersten Wendepunkt (C) entsprechend bestimmt ist, und einem Zeitpunkt, zu dem der Druck im Rohling (3) einen zweiten vorbestimmten Wert (PD) erreicht, der als dem zweiten Wendepunkt (D) entsprechend bestimmt ist, gemessen wird;
- Die dritte Strecke (D3) in einem dritten Zeitintervall zwischen dem Zeitpunkt, zu dem der Druck im Rohling (3) den zweiten vorbestimmten Wert (PD) erreicht hat, und dem Boxing-Endzeitpunkt (tE) gemessen wird.

**7.** Verfahren nach einem der Ansprüche 1 bis 3, **dadurch gekennzeichnet, dass** es Folgendes umfasst:

- In der Phase des Messens das Messen des Drucks in Echtzeit, der während der Vorblas- und Blasphasen im Rohling (**3**) herrscht, wobei die Druckwerte gespeichert werden;
- In der Phase des Aufbauens das Aufbauen einer Blaskurve, die die Variationen des Drucks, der im Rohling (**3**) herrscht, in Abhängigkeit von der Zeit charakterisiert;
- Das Erfassen des ersten Wendepunkts (**C**) und des zweiten Wendepunkts (**D**) auf der Referenzblaskurve.

**8.** Verfahren nach einem der vorhergehenden Ansprüche, **dadurch gekennzeichnet, dass**, wenn eine gemessene Strecke (D1; D2; D3) als kleiner als die entsprechende Nominalstrecke (D1th; D2th; D3th) bestimmt ist, die Steuereinheit (**4**) für den nachfolgenden Herstellungszyklus in der Einheit eine Erhöhung der Vorgabe des Durchsatzes des Magnetventils (**37**) in jedem Zeitintervall, in dem eine Differenz festgestellt wurde, befiehlt.

**9.** Verfahren nach einem der vorhergehenden Ansprüche, **dadurch gekennzeichnet, dass**, wenn eine gemessene Strecke (D1; D2; D3) als größer als die entsprechende Nominalstrecke (D1th; D2th; D3th) bestimmt ist, die Steuereinheit (**4**) für den nachfolgenden Herstellungszyklus in der Einheit eine Verringerung der Vorgabe des Durchsatzes des Magnetventils (**37**) in jedem Zeitintervall, in dem eine Differenz festgestellt wurde, befiehlt.

**Claims**

**1.** Method for manufacturing a container (**2**) from a blank (**3**) made of plastic material, in a forming unit (**1**) comprising:

- a mold (**5**) provided with a wall (**6**) defining a cavity (**7**) with the impression of the container (**2**) and an insert (**9**) that is movable, relative to the wall (**6**), between a retracted position, in which the insert (**9**) is set back relative to the cavity (**7**), and an extended position, in which the insert (**9**) at least partly protrudes into the cavity (**7**),
- a boxing system (**23**) comprising a cylinder (**24**), on which the insert (**9**) is mounted, a fluidic circuit (**31**) linking the cylinder (**24**) to a source (**34**) of fluid under pressure, and a solenoid valve (**37**) interposed on the fluidic circuit (**31**) between the cylinder (**24**) and the source (**34**) of fluid under pressure;

- a control unit (**4**) linked to the solenoid valve (**37**) and programmed to vary flow rate setpoints thereof in order to drive the displacement of the insert;

this method comprising:

- a preblowing phase, which comprises the injection, into the blank (**3**) previously introduced into the mold (**5**), of a fluid at a preblowing pressure;
- a blowing phase after the preblowing phase, which comprises the injection, into the blank (**3**) of a fluid at a blowing pressure greater than the preblowing pressure;
- a boxing phase, which comprises the displacement of the insert (**9**) from its retracted position to its extended position during at least one of the abovementioned preblowing or blowing phases;
- a phase of measurement, in real time, of the position of the insert (**9**), the values of the position of the insert (**9**) being memorized;
- a construction phase, based on the values of the position of the insert (**9**) thus memorized, of a so-called boxing curve characterizing the variations of the position of the insert (**9**) as a function of time;

this method being **characterized in that** it comprises the operations consisting in:

- taking into account, on a reference blowing curve characterizing the variations of the pressure prevailing in the blank (**3**) during preblowing and blowing;

• a first inflection point (**C**), from which, during preblowing, the pressure is strictly increasing;
• a second inflection point (**D**) after the point (**C**) and from which the slope of the curve shows an increase;

- detecting, on the boxing curve:

• a boxing start instant ($t_0$) marking the start of the displacement of the insert (**9**);
• a boxing end instant ($t_E$) marking the arrival of the insert (**9**) at the end of travel;

- measuring:

• a first distance (**D1**) traveled by the insert (**9**) in a first time interval lying between the boxing start instant ($t_0$) and an instant ($t_C$) that is decreed to correspond to the first inflection point (**C**) of the reference blowing curve;

• a second distance (**D2**) traveled by the insert (**9**) in a second time interval lying between the instant ($t_C$) that is decreed to correspond to the first inflection point (**C**) and an instant ($t_D$) that is decreed to correspond to the second inflection point (**D**) of the reference blowing curve;

• a third distance (**D3**) traveled by the insert (**9**) in a third time interval lying between the instant ($t_D$) that is decreed to correspond to the second inflection point (**D**) of the reference blowing curve and the boxing end instant ($t_E$);

- comparing the measured distances (**D1**; **D2**; **D3**) with predetermined respective nominal distances (**D1th; D2th; D3th);**
- if at least one of the measured distances (**D1**; **D2**; **D3)** is decreed to be different from the corresponding nominal distance (**D1th**; **D2th**; **D3th**), commanding, by the control unit (**4**), for the next manufacturing cycle in said unit, a modification of the flow rate setpoint of the solenoid valve (**37**) in each time interval in which a difference has been recorded.

2. Method according to Claim 1, **characterized in that** a measured distance (**D1**; **D2**; **D3**) is decreed to be different from the corresponding nominal distance (**D1th**; **D2th; D3th)** as soon as the measured distance differs from the nominal distance, i.e.:

$$\text{D1th} \neq \text{D1}$$

and/or

$$\text{D2th} \neq \text{D2}$$

and/or

$$\text{D3th} \neq \text{D3}.$$

3. Method according to Claim 1, **characterized in that** a measured distance (**D1**; **D2**; **D3**) is decreed to be different from the corresponding nominal distance (**D1th**; **D2th; D3th**) if the deviation between the measured distance and the nominal distance is greater than or equal to 5% of the nominal distance value, i.e.:

$$\left| \text{D1th} - \text{D1} \right| \geq 0.05 \ \text{D1th}$$

and/or

$$\left| \text{D2th} - \text{D2} \right| \geq 0.05 \ \text{D2th}$$

and/or

$$\left| \text{D3th} - \text{D3} \right| \geq 0.05 \ \text{D3th}.$$

4. Method according to one of the preceding claims, **characterized in that**, for each container model (**2**) intended to be manufactured in the forming unit (**1**), the reference blowing curve characterizing the variations of the pressure prevailing in the blank (**3**) as a function of time is worked out in the development of the equipment incorporating this unit (**1**).

5. Method according to one of Claims 1 to 4, **characterized in that**:

- the first distance (**D1**) is measured in a first time interval lying between the boxing start instant ($t_0$) and a predetermined instant ($t_C$) at which the insert (**9**) is assumed to have traveled the first distance (**D1**) ;
- the second distance (**D2**) is measured in a second time interval lying between the instant ($t_C$) at which the insert (**9**) is assumed to have traveled the first distance (**D1**) and a predetermined instant ($t_D$) at which the insert (**9**) is assumed to have traveled the second distance (**D2**);
- the third distance (**D3**) is measured in a third time interval lying between the instant ($t_D$) at which the insert (**9**) is assumed to have traveled the second distance (**D2**) and the boxing end instant ($t_E$).

6. Method according to one of Claims 1 to 4, **characterized in that**:

- the measurement phase comprises the real-time measurement of the pressure prevailing in the blank (**3**) during the preblowing and blowing phases,
- the first distance (**D1**) is measured in a first time interval lying between the boxing start instant (**t0**) and an instant at which the pressure in the blank reaches a predetermined value (**PC**) that is decreed to correspond to the first inflection point (**C**);
- the second distance (**D2**) is measured in a second time interval lying between the instant at which the pressure in the blank has reached a predetermined value (**PC**) that is decreed to correspond to the first inflection point (**C**) and an instant at which the pressure in the blank (**3**) reaches a second predetermined value (**PD**) that is decreed to correspond to the second inflection point (**D**);
- the third distance (**D3**) is measured in a third time interval lying between the instant at which the pressure in the blank (**3**) has reached the second predetermined value (**PD**), and the boxing end instant (**t$_E$**) .

7. Method according to one of Claims 1 to 3, **characterized in that** it comprises:

   - in the measurement phase, the real-time measurement of the pressure prevailing in the blank (**3**) during the preblowing and blowing phases, the pressure values being memorized;
   - in the construction phase, the construction of a so-called blowing curve characterizing the variations of the pressure prevailing in the blank (**3**) as a function of time;
   - the detection of the first inflection point (**C**) and of the second inflection point (**D**) on the reference blowing curve.

8. Method according to one of the preceding claims, **characterized in that**, when a measured distance (**D1**; **D2**; **D3**) is decreed to be less than the corresponding nominal distance (**D1th**; **D2th**; **D3th**), the control unit (**4**) commands, for the next manufacturing cycle in said unit, an increase in the flow rate setpoint of the solenoid valve (**37**) in each time interval in which a difference has been recorded.

9. Method according to one of the preceding claims, **characterized in that**, when a measured distance (**D1**; **D2**; **D3**) is decreed to be greater than the corresponding nominal distance (**D1th**; **D2th**; **D3th**), the control unit (**4**) commands, for the next manufacturing cycle in said unit, a reduction of the flow rate setpoint of the solenoid valve (**37**) in each time interval in which a difference has been recorded.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1922256 A
- US 2009139996 A, Sidel
- EP 2173637 A, Sidel
- FR 3029133, Sidel
- FR 2998207
- WO 2014080109 A